# EUROPÄISCHE PATENTANMELDUNG

(11) **EP 1 521 190 A1**
(43) Veröffentlichungstag der Anmeldung: **06.04.2005**
(21) Anmeldenummer: 03022179.0
(22) Anmeldetag: 30.09.2003
(51) Int. Cl.: G06F 17/60, G07F 19/00

(54) **Bezahlung und/oder berechtigte Nutzung von Waren und/oder Dienstleistungen unter Verwendung mobiler Kommunikationsgeräte**

(71) Anmelder: SIEMENS AKTIENGESELLSCHAFT, 80333 München (DE)
(72) Erfinder: Wiehler, Gerhard, 82223 Eichenau (DE)

(57) **Zusammenfassung**

Zur Bezahlung bzw. berechtigten Nutzung von Waren und/oder Dienstleistungen unter Verwendung mobiler Kommunikationsgeräte wird ein Angebotsidentifikator, der einem Waren- und/oder Dienstleistungsangebot zugeordnet ist, für mindestens einen Abnehmer verfügbar gemacht. Auf Anforderung eines Abnehmers wird aus dem Angebotsidentifikator und einem dem Abnehmer zugeordneten Abnehmeridentifikator ein Berechtigungsidentifikator berechnet, über eine Mobilkommunikationsschnittstelle an ein dem Abnehmer zugeordnetes mobiles Kommunikationsgerät übermittelt und dort zumindest temporär gespeichert. Der im mobilen Kommunikationsgerät gespeicherte Berechtigungsidentifikator wird bei Bezahlung bzw. der Nutzung einer dem Angebotsidentifikator zugeordneten Ware bzw. Dienstleistung erfaßt und zur Verrechnung bzw. Berechtigungskontrolle entsprechend einer dem Angebotsidentifikator zugeordneten Angebotsinformation verwendet.

## Beschreibung

Die vorliegende Erfindung betrifft ein Verfahren zur Bezahlung und/oder berechtigten Nutzung von Waren und/oder Dienstleistungen unter Verwendung mobiler Kommunikationsgeräte, eine Kassen- und/oder Berechtigungskontrolleinrichtung und ein Steuerungsprogramm.

Im Rahmen von Marketing- und Verkaufsstrategien wurden bisher zahlreiche Bezahlungsverfahren auf Rabattmarken- oder -kartenbasis entwickelt, durch welche Kundenbindungen gefestigt bzw. intensiviert werden sollen. Beispielsweise werden von Handelsketten rabattkartenbasierte Bezahlungsverfahren angeboten, wobei Rabattkarten kunden- bzw. abnehmerspezifisch ausgestellt werden und bei Bezahlungsvorgängen als Rabattberechtigungsnachweise dienen. Entsprechend einer Variante solcher Bezahlungsverfahren werden Rabattbeträge auf einem kunden- bzw. abnehmerspezifischen Guthabenkonto angespart und können beispielsweise bei Überschreiten eines vorgegebenen Guthabenwerts für nachfolgende Bezahlungsvorgänge verwendet werden. Derartige Bezahlungsverfahren sind insbesondere unter dem Namen "Miles & More" bekannt und werden u.a. von zahlreichen Fluggesellschaften, Fahrzeugvermietungsfirmen und Hotelketten angeboten. Mit derartigen Verfahren ist beispielsweise allerdings nur schwer nachvollziehbar, welche Umsätze auf welche Werbeaktionen zurückzuführen sind.

Neben rabattkartenbasierten Bezahlungsverfahren existieren Verfahren, bei denen beispielsweise in Printmedien oder im Internet Gutscheine zum Ausschneiden bzw. Ausdrucken angeboten werden, die einem Anbieter bei Bezahlung oder Nutzung von Waren und Dienstleistungen zur Rabatt- bzw. Gutschriftgewährung vorgelegt werden können. Derartige Verfahren weisen jedoch den Nachteil einer unzureichenden elektronischen Verarbeitbarkeit und Auswertung auf.

Der vorliegenden Erfindung liegt die Aufgabe zugrunde, ein Verfahren zur effizienteren auswertbaren, berechtigungsabhängigen Abwicklung von Bezahlungsvorgängen und/oder Nutzungsberechtigungskontrollvorgängen sowie geeignete Vorrichtungen und Realisierungen zur Durchführung des Verfahrens anzugeben.

Diese Aufgabe wird erfindungsgemäß durch ein Verfahren mit den in Anspruch 1, eine Kassen- und/oder Berechtigungskontrolleinrichtung mit den in Anspruch 9 und ein Steuerungsprogramm mit den in Anspruch 10 angegebenen Merkmalen gelöst. Vorteilhafte Weiterbildungen der vorliegenden Erfindung sind in den abhängigen Ansprüchen angegeben.

Ein wesentlicher Aspekt der vorliegenden Erfindung besteht darin, daß einem Waren- und/oder Dienstleistungsangebot ein Angebotsidentifikator zugeordnet und für mindestens einen Abnehmer verfügbar gemacht wird. Auf Anforderung eines Abnehmers wird aus diesem Angebotsidentifikator und einem dem Abnehmer zugeordneten Abnehmeridentifikator ein Berechtigungsidentifikator berechnet. Der Berechtigungsidentifikator wird dann über eine Mobilkommunikationsschnittstelle an ein dem Abnehmer zugeordnetes mobiles Kommunikationsgerät übermittelt und dort zumindest temporär gespeichert. Bei Bezahlung bzw. Nutzung einer dem Angebotsidentifikator zugeordneten Ware bzw. Dienstleistung wird der im mobilen Kommunikationsgerät gespeicherte Berechtigungsidentifikator erfaßt und zur Verrechnung bzw. Berechtigungskontrolle entsprechend einer dem Angebotsidentifikator zugeordneten Angebotsinformation verwendet.

Ein Vorteil des erfindungsgemäßen Verfahrens besteht daher in seiner offenen, flexiblen und automatisierungsgerechten Gestaltung, wodurch sich ein Einsatz des Verfahrens für beliebige Abnehmer bzw. Kunden, die über ein Mobiltelefon mit marktüblicher Funktionalität verfügen, und beliebige Anbieter von Waren bzw. Dienstleistungen eignet. Außerdem kann das Verfahren sowohl für einzelne Werbeaktionen mit besonderen Bezugskonditionen als auch für eine Gewährung von dauerhaften Rabatten verwendet werden. Insbesondere ermöglicht das erfindungsgemäße Verfahren durch die Erfassung des Berechtigungsindikators bei Bezahlung bzw. Nutzung eine exakte Ableitung eines durch eine ausgewählte Werbeaktion zusätzlich realisierten Umsatzes sowie gezielte Analysen des Verhaltens ausgewählter Abnehmer bzw. Kundengruppen. Aus dem Berechtigungsindikator können nämlich Angaben über Abnehmer und bezogene Waren bzw. Dienstleistungen abgeleitet werden, da der dem Abnehmer zugeordnete Abnehmeridentifikator und der einem Waren- bzw. Dienstleistungsangebot zugeordnete Angebotsidentifikator in die Berechnung des Berechtigungsidentifikators einbezogen werden.

Die vorliegende Erfindung wird an einem Ausführungsbeispiel anhand der Zeichnung näher erläutert. Es zeigt
- Figur 1: eine schematische Darstellung eines Anwendungsumfeldes der vorliegenden Erfindung mit einem Anbieter, einem Kunden und einem Betreiber gutscheinbasierter Dienste,
- Figur 2: eine schematische Darstellung bei einer Registrieung des Anbieters und des Kunden durch den Betreiber verwalteter Datenobjekte,
- Figur 3: eine schematische Darstellung bei einer Bereitstellung eines Angebotsidentifikators und eines Berechtigungsidentifikators durch den Betreiber verwalteter Datenobjekte.

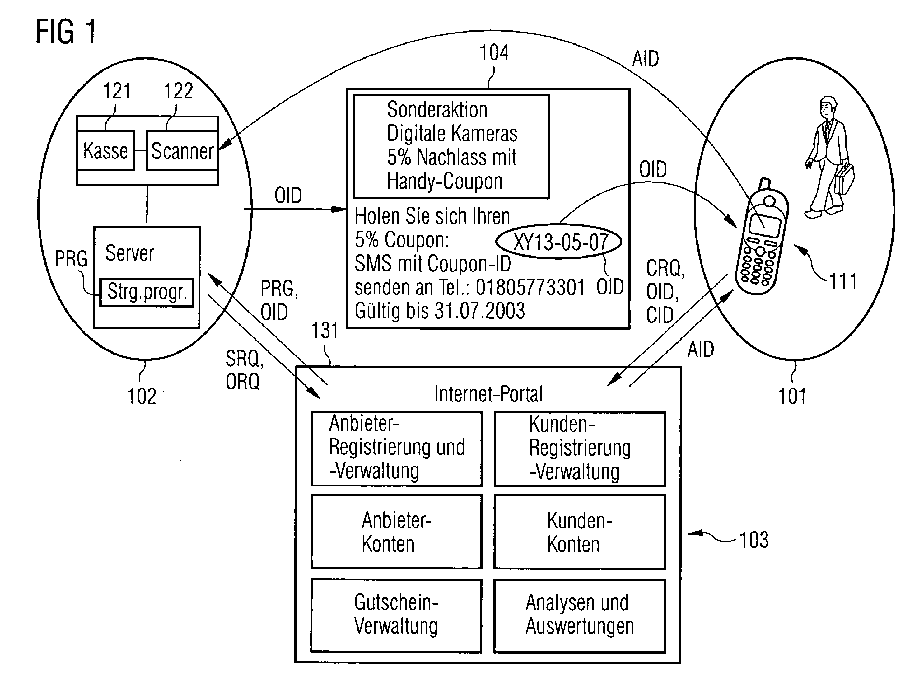

Das in Figur 1 dargestellte Anwendungsumfeld der vorliegenden Erfindung umfaßt einen Kunden 101, einen Anbieter 102 und einen Betreiber 103 gutscheinbasierter Dienste. Zusätzlich ist ein Werbemedium 104 vorgesehen, durch das ein Angebotsidentifikator OID für den Kunden 101 verfügbar gemacht wird. Der Angebotsidentifikator OID ist einem Waren- bzw. Dienstleistungsangebot des Anbieters 102 zugeordnet. Das Werbemedium 104 kann beliebig gewählt werden und beispielsweise eine Anzeige in einem Printmedium oder auf einer Litfaßsäule sein. Weitere Alternativen sind Werbung im Internet und Übermittlung von SMS- bzw. MMS-Nachrichten mit Werbeinhalt.

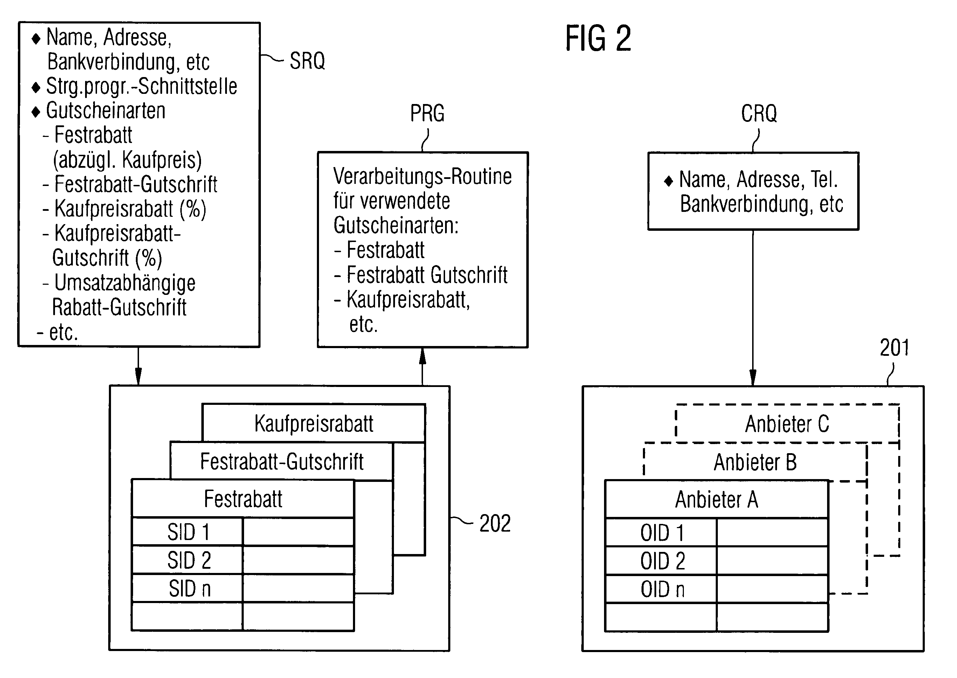

Ein an einer Nutzung gutscheinbasierter Dienste interessierter Anbieter 102 kann sich mittels einer an den Betreiber 103 übermittelten Anbieterregistrierungsanforderung SRQ registrieren lassen. Dies kann beispielsweise durch Anwahl einer Portaladresse des Betreibers 103 im Internet erfolgen. Entsprechend Figur 2 kann eine Anbieterregistrierungsanforderung SRQ Angaben über Name, Adresse, Bankverbindung des Anbieters 102, anbieterseitig für Kasseneinrichtungen verwendete Steuerungsprogramm-Schnittstellen und Gutscheinarten umfassen, die im Rahmen von Kundenbindungsmaßnahmen des Anbieters 102 verwendet werden sollen. Zu den Gutscheinarten zählen beispielsweise Festrabatt und -Gutschrift, Kaufpreisrabatt und -Gut-schrift, umsatzabhängige Rabatt-Gutschrift, Geldgutschrift, Warengutschein oder Verlosungsgutschein. Nach erfolgreicher Überprüfung der von der Anbieterregistrierungsanforderung SRQ umfaßten Angaben übermittelt der Betreiber 103 ein Steuerungsprogramm PRG für Kassen- bzw. Berechtigungskontrolleinrichtungen an den Anbieter 102, der daraufhin eine Installation des Steuerungsprogramms PRG veranlaßt. Entsprechend Figur 2 umfaßt das Steuerungsprogramm PRG Verarbeitungsroutinen für die vom Anbieter 102 verwendeten Gutscheinarten.

Eine in Figur 1 dargestellte Kasseneinrichtung umfaßt beispielsweise eine Registrierkasse 121 und einen mit der Registrierkasse 121 verbundenen Scanner 122. Durch die Installation des Steuerungsprogramms PRG können die Kassen- bzw. Berechtigungskontrolleinrichtungen Gutscheine der vom Anbieter 102 verwendeten Gutscheinarten überprüfen und Kaufvorgänge mit elektronischen Gutscheinen verarbeiten.

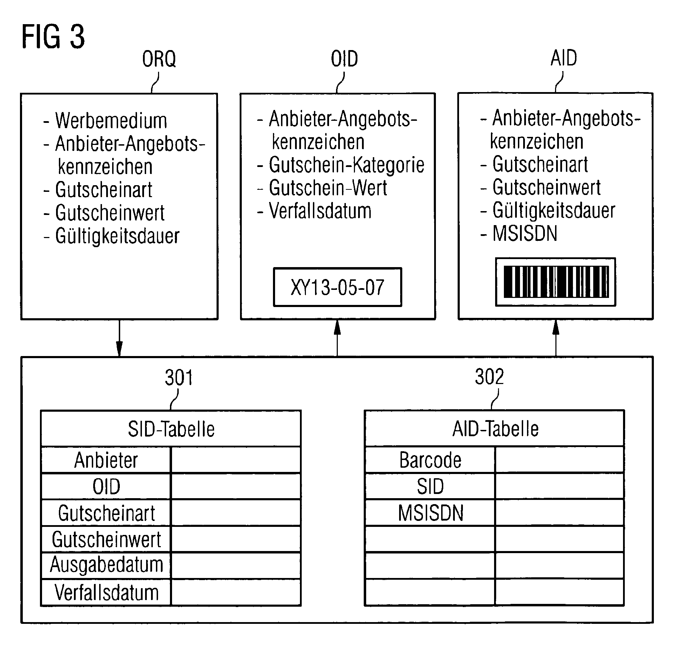

Plant der Anbieter 102 eine Verkaufsaktion für Konsumgüter, so fordert er beim Betreiber 103 über dessen Internet-Portal 131 zunächst eine Zuweisung von zumindest einem Angebotsidentifikator OID an. Hierzu übermittelt der Anbieter 102 eine Angebotsidentifikatoranforderung ORQ an den Betreiber 103. Entsprechend Figur 3 kann der Anbieter 102 in der Angebotsidentifikatoranforderung ORQ beispielsweise ein anbietereigenes Angebotskennzeichen definieren, Gutscheinart und -wert angeben sowie eine Gültigkeitsdauer für Gutscheine festlegen. Zusätzlich kann der Anbieter 102 ein Werbemedium für eine Rabattaktion angeben.

Auf die Angebotsidentifikatoranforderung ORQ und nach erfolgreicher Prüfung erzeugt der Betreiber 103 entsprechend einem hier nicht näher beschriebenen Verfahren einen eindeutigen zum anbietereigenen Angebotskennzeichen korrelierenden Angebotsidentifikator OID und übermittelt diesen an den Anbieter 102. Der Angebotsidentifikator OID kann entsprechend Figur 3 beispielsweise Informationen enthalten, aus denen der Kunde 101 den Anbieter 102, das anbietereigene Angebotskennzeichen, Gutscheinart, Gutscheinwert und Gültigkeitsdauer ableiten kann. Der Angebotsidentifikator OID wird zusammen mit einem erläuternden Begleittext in einer Anzeige des Anbieters 102 plaziert und im Werbemedium 104 veröffentlicht.

Der Kunde 101, der die Anzeige des Anbieters 102 liest, kann dieser den Angebotsidentifikator OID entnehmen. Der Angebotsidentifikator OID kann dann zusammen mit einem Kundenidentifikator CID über eine Mobilkommunikationsschnittstelle zwischen einem dem Kunden 101 zugeordneten Mobilkommunikationsgerät 111 und einer dem Betreiber 103 zugeordneten Empfangseinrichtung an den Betreiber 103 übermittelt werden. Auf Seiten des Betreibers 103 wird aus dem Angebotsidentifikator OID und dem Kundenidentifikator CID ein Berechtigungsidentifikator AID berechnet und über die Mobilkommunikationsschnittstelle zurück an den Kunden 101 übermittelt. Der Berechtigungsidentifikator AID wird dann zumindest temporär im mobilen Kommunikationsgerät 111 des Kunden 101 gespeichert.

Der Angebotsidentifikator OID kann beispielsweise durch den Kunden 101 mittels einer an eine vorgegebene Rufnummer übermittelten Kurzmitteilung, die den Angebotsidentifikator OID und den Kundenidentifikator CID enthält, an den Betreiber 103 übermittelt werden. Der Berechtigungsidentifikator AID kann seinerseits als EMS oder MMS an den Kunden 101 übermittelt werden und an dessen mobilem Kommunikationsgerät 111 als Barcode dargestellt werden. Aus dem Berechtigungsidentifikator AID können entsprechend Figur 3 beispielsweise Angaben über den Anbieter 102, das anbietereigene Angebotskennzeichen, die Gutscheinart, den Gutscheinwert, die Gültigkeitsdauer bzw. Angaben über den Kunden ableitbar sein. Zu den Angaben über den Kunden 101 zählt im vorliegenden Fall auch eine internationale Mobilfunk-Teilnehmerkennung (MSISDN) für das bei einer Gutscheineinlösung zu verwendende mobile Kommunikationsgerät 111 des Kunden 101.

Falls der Kunde 101 noch nicht beim Betreiber 103 registriert ist, kann sich der Kunde mittels einer Kundenregistrierungsanforderung CRQ beim Betreiber 103 registrieren lassen. Entsprechend Figur 2 umfaßt eine Kundenregistrierungsanforderung CRQ beispielsweise Angaben über Namen, Adresse, Telefonnummer und Bankverbindung des Kunden 101. Nach erfolgreicher Registrierung ist für den Kunden 101 die beschriebene Anforderung eines Berechtigungsidentifikators AID möglich.

Wenn sich der Kunde 101 dazu entscheidet, einen durch einen elektronischen Gutschein rabattierten Konsumgüterartikel zu erwerben, kann er gegenüber Bedienpersonal an einer dem Anbieter 102 zugeordneten Kasseneinrichtung 121 erklären, daß er einen elektronischen Gutschein mittels seines mobilen Kommunikationsgeräts 111 zur Bezahlung einlösen möchte. Das Bedienpersonal an der Kasseeinrichtung 121 kann dann einen entsprechenden Kassenmodus auswählen, in dem das zuvor an den Anbieter 102 übermittelte Steuerungsprogramm PRG zum Ablauf kommt.

Ist der Berechtigungsidentifikator AID in Form eines Barcodes an einer Anzeigeeinrichtung des mobilen Kommunikationsgerätes 111 des Kunden 101 darstellbar, so kann dieser Barcode über einen der Kasseneinrichtung 121 zugeordneten Scanner 122 erfaßt und nachfolgend zur Verrechnung entsprechend einer dem Angebotsidentifikator OID zugeordneten Angebotsinformation verwendet werden. Während eines Verrechnungsvorgangs überprüft das Steuerungsprogramm PRG Verfallsdatum sowie Gutscheinart und bearbeitet den Verrechnungsvorgangs entsprechend aus dem Berechtigungsidentifikator AID ableitbaren Verarbeitungsparametern ab. Derartige Verarbeitungsparameter können vom Berechtigungsidentifikator AID als codierte Angaben über einen Anbieter, ein anbietereigenes Angebotskennzeichen, eine Gutscheinart, einen Gutscheinwert, eine Gültigkeitsdauer bzw. codierte Angaben über einen Abnehmer bzw. Kunden umfaßt sein.

Alternativ zu einer Barcodeerfassung an der Kasseneinrichtung 121 während eines Verrechnungsvorgangs kann der Berechtigungsidentifikator AID auch über eine drahtungebundene Schnittstelle an die Kasseneinrichtung 121 übermittelt werden. Insbesondere bietet sich hierbei eine Nutzung von Infrarot- oder Bluetooth-Schnittstellen zwischen dem mobilem Kommunikationsgerät 111 des Kunden 101 und der Kasseneinrichtung 121 an. Als sehr einfache Alternative zu einer Barcodeerfassung ist auch eine Tastatureingabe des Berechtigungsidentifikators AID an der Kasseneinrichtung 121 ausreichend.

Nach Abarbeitung des Verrechnungsvorgangs veranlaßt das Steuerungsprogramm PRG eine Speicherung des verwendeten Berechtigungsidentifikators AID sowie von aus diesem ableitbaren Angaben und von Angaben über mittels des Berechtigungsidentifikators AID bezahlten Konsumgüter. Diese Daten werden zu Auswertungszwecken in einer Datenbank des Betreibers 103 gespeichert und in Kunden- 201 und Anbieterkonten 202 entsprechend Figur 2 für den Kunden 101 bzw. den Anbieter 102 auswertbar aufbereitet.

Ein Kunden- 201 bzw. Anbieterkonto 202 wird beispielsweise im Rahmen einer erfolgreichen Kunden- bzw. Anbieterregistrierung durch den Betreiber 103 erzeugt. Auf ein Kundenkonto 201 werden bei einem Kaufvorgang erzielte Rabattgutschriften gebucht. Zusätzlich sind in einem Kundenkonto 201 Informationen über Angebotsidentifikatoren OID abgespeichert, zu denen für den Kunden 101 ein Berechtigungsidentifikator AID erstellt wurde. Diese Informationen können entsprechend Figur 2 nach Anbietern gegliedert sein.

Auf ein Anbieterkonto 202 werden entsprechend Figur 2 beispielsweise einem anbietereigenen Angebotskennzeichen SID zugeordnete Umsätze gebucht und Rabattgutschriften ausgewiesen, gegebenenfalls nach Gutscheinarten gegliedert. Kunde 101 und Anbieter 102 können in periodischen Abständen oder auf Anfrage über ihre jeweiligen Kontostände informiert werden, wobei ein solcher Dienst durch den Betreiber 103 kostenpflichtig angeboten werden kann.

Aus den in der Datenbank des Betreibers 103 gespeicherten Informationen und deren Verknüpfungen lassen sich automatisch oder auf Anfrage eine Vielzahl von Analysen und Auswertungen erstellen, die durch den Kunden 101 oder den Anbieter 102 abrufbar sind. Beispielsweise kann analysiert werden, welche Artikel durch welche Werbemaßnahmen eine starke Verkaufsförderung erzielten oder inwieweit Rabatte zu zusätzlichen Umsätzen führen.

Darüber hinaus werden entsprechend Figur 3 durch den Betreiber 103 Tabellen 301, 302 für die anbietereigenen Angebotskennzeichen SID und für die Berechtigungsidentifikatoren AID verwaltet. Die für die anbietereigenen Angebotskennzeichen SID vorgesehenen Tabellen 301 weisen als Attribute beispielsweise Gutscheinart und -wert, Ausgabe- und Verfallsdatum, Anbieter und Angebotsidentifikator OID auf. Die für die Berechtigungsidentifikatoren AID vorgesehenen Tabellen 302 weisen beispielsweise die Attribute anbietereigenes Angebotskennzeichen SID, internationale Mobilfunk-Teilnehmerkennung MSISDN des jeweiligen Kunden als Repräsentation des Kundenidentifikators CID und resultierender am jeweiligen Mobilkommunikationsgerät darzustellender Barcode als Repräsentation des Berechtigungsidentifikators AID auf.

Eine Aktualisierung des Steuerungsprogramms PRG kann direkt und autorisiert online vorgenommen werden. Alternativ können auch zwischen dem Anbieter 102 und dem Betreiber 103 entsprechende Schnittstellen für ein Steuerungsprogramm-Upgrade vereinbart werden. Insbesondere bei größeren Handelsketten ist es auch denkbar, daß ein Anbieter Funktionen eines Betreibers unter Nutzung geeigneter Schnittstellen zu bestehenden Warenwirtschaftssystemen wahrnimmt. Analog zum beschriebenen Verfahren zur Bezahlung von Konsumgütern ist auch eine Verwendung des vorgeschlagenen Verfahrens zur Nutzung von Waren bzw. Dienstleistungen möglich. In diesem Fall erfolgt mittels des vorgeschlagenen Verfahrens eine Berechtigungskontrolle im Hinblick auf einen von einem Nutzungsinteressenten ausgewiesenen Berechtigungsidentifikator und ein Waren- bzw. Dienstleistungsangebot, dem ein Angebotsidentifikator zugeordnet ist. Anwendungsszenarien sind in diesem Fall beispielsweise eine gutscheinbasierte Zutrittsberechtigung bzw. ein bargeldloser elektronischer Ticketverkauf per Gutschein.

Das vorangehend beschriebene Verfahren zur Bezahlung bzw. berechtigten Nutzung von Waren bzw. Dienstleistungen unter Verwendung mobiler Kommunikationsendgeräte wird vorzugsweise mittels eines Steuerungsprogramms implementiert, das in einem Arbeitsspeicher einer Datenverarbeitungsanlage ladbar ist und zumindest einen Codeabschnitt aufweist, bei dessen Ausführung eine Erfassung eines Berechtigungsidentifikators bei Bezahlung bzw. Nutzung einer Ware bzw. Dienstleistung veranlaßt wird. Des weiteren wird der Berechtigungsidentifikator bei Ausführung des Codeabschnitts zur Verrechnung bzw. Berechtigungskontrolle verwendet wird, wenn das Steuerungsprogramm in der Datenverarbeitungsanlage abläuft. Wird die Datenverarbeitungsanlage in eine Kassen- bzw. Berechtigungskontrolleinrichtung integriert, so ist auf diese Weise eine Kassen- bzw. Berechtigungskontrolleinrichtung realisiert, die zumindest ein Mittel zur Erfassung eines in einem mobilen Kommunikationsgerät gespeicherten Berechtigungsidentifikators bei Bezahlung bzw. Nutzung der Ware bzw. Dienstleistung und zumindest ein Mittel zur Verwendung des Berechtigungsidentifikators zur Verrechnung bzw. Berechtigungskontrolle aufweist.

Die Anwendung der vorliegenden Erfindung ist nicht auf das hier beschriebene Ausführungsbeispiel beschränkt.

## Patentansprüche

1. Verfahren zur Bezahlung und/oder berechtigten Nutzung von Waren und/oder Dienstleistungen unter Verwendung mobiler Kommunikationsgeräte, bei dem
- ein Angebotsidentifikator, der einem Waren- und/oder Dienstleistungsangebot zugeordnet ist, für mindestens einen Abnehmer verfügbar gemacht wird,
- auf Anforderung eines Abnehmers aus dem Angebotsidentifikator und einem dem Abnehmer zugeordneten Abnehmeridentifikator ein Berechtigungsidentifikator berechnet, über eine Mobilkommunikationsschnittstelle an ein dem Abnehmer zugeordnetes mobiles Kommunikationsgerät übermittelt und dort zumindest temporär gespeichert wird,
- der im mobilen Kommunikationsgerät gespeicherte Berechtigungsidentifikator bei Bezahlung und/oder Nutzung einer dem Angebotsidentifikator zugeordneten Ware und/oder Dienstleistung erfaßt und zur Verrechnung und/oder Berechtigungskontrolle entsprechend einer dem Angebotsidentifikator zugeordneten Angebotsinformation verwendet wird.

2. Verfahren nach Anspruch 1, bei dem
bei Bezahlung und/oder Nutzung einer dem Angebotsidentifikator zugeordneten Ware und/oder Dienstleistung der verwendete Berechtigungsidentifikator und/oder aus diesem ableitbare Angaben und Angaben über mittels des Berechtigungsidentifikators bezahlte und/oder genutzte Waren und/oder Dienstleistungen in einer Datenbank zu Auswertungszwecken gespeichert werden.

3. Verfahren nach einem der Ansprüche 1 oder 2, bei dem
aus dem Berechtigungsidentifikator Angaben über einen Anbieter, ein anbietereigenes Angebotskennzeichen, eine Gutscheinart, einen Gutscheinwert, eine Gültigkeitsdauer und/oder Angaben über den Abnehmer ableitbar sind.

4. Verfahren nach Anspruch 3, bei dem
der Berechtigungsidentifikator codierte Angaben über einen Anbieter, ein Angebotskennzeichen, eine Gutscheinart, einen Gutscheinwert, eine Gültigkeitsdauer und/oder codierte Angaben über den Abnehmer umfaßt.

5. Verfahren nach einem der Ansprüche 1 bis 4, bei dem
zur Bezahlung und/oder Nutzung der dem Angebotsidentifikator zugeordneten Ware und/oder Dienstleistung eine Darstellung des im mobilen Kommunikationsgerät gespeicherten Berechtigungsidentifikators an einer Anzeigeeinrichtung des mobilen Kommunikationsgeräts angezeigt und an einer Kassen- und/oder Berechtigungskontrolleinrichtung optisch abgetastet wird.

6. Verfahren nach Anspruch 5, bei dem
der Berechtigungsidentifikator als Barcode dargestellt wird.

7. Verfahren nach einem der Ansprüche 1 bis 4, bei dem
zur Bezahlung und/oder Nutzung der dem Angebotsidentifikator zugeordneten Ware und/oder Dienstleistung der im mobilen Kommunikationsgerät gespeicherte Berechtigungsidentifikator über eine drahtungebundene Schnittstelle an eine Kassen- und/oder Berechtigungskontrolleinrichtung übermittelt wird.

8. Verfahren nach Anspruch 7, bei dem
der Berechtigungsidentifikator über eine Infrarot- oder Bluetooth-Schnittstelle an die Kassen- und/oder Berechtigungskontrolleinrichtung übermittelt wird.

9. Kassen- und/oder Berechtigungskontrolleinrichtung mit
- zumindest einem Mittel zur Erfassung eines in einem mobilen Kommunikationsgerät gespeicherten Berechtigungsidentifikators, der aus einem zu einem Waren- und/oder Dienstleistungsangebot zugeordneten Angebotsidentifikator und einem zu einem Abnehmer zugeordneten Abnehmeridentifikator berechnet ist, bei Bezahlung und/oder Nutzung einer dem Angebotsidentifikator zugeordneten Ware und/oder Dienstleistung,
- zumindest einem Mittel zur Verwendung des Berechtigungsidentifikators zur Verrechnung und/oder Berechtigungskontrolle entsprechend einer dem Angebotsidentifikator zugeordneten Angebotsinformation.

10. Steuerungsprogramm, das in einen Arbeitsspeicher einer Datenverarbeitungsanlage ladbar ist und zumindest einen Codeabschnitt aufweist, bei dessen Ausführung
- eine Erfassung eines in einem mobilen Kommunikationsgerät gespeicherten Berechtigungsidentifikators, der aus einem zu einem Waren- und/oder Dienstleistungsangebot zugeordneten Angebotsidentifikator und einem zu einem Abnehmer zugeordneten Abnehmeridentifikator berechnet ist, bei Bezahlung und/oder Nutzung einer dem Angebotsidentifikator zugeordneten Ware und/oder Dienstleistung veranlaßt wird,
- der Berechtigungsidentifikators zur Verrechnung und/oder Berechtigungskontrolle entsprechend einer dem Angebotsidentifikator zugeordneten Angebotsinformation verwendet wird,
wenn das Steuerungsprogramm in der Datenverarbeitungsanlage abläuft.
